# EUROPÄISCHE PATENTSCHRIFT

(11) **EP 1 537 320 B1**
(45) Veröffentlichungstag und Bekanntmachung des Hinweises auf die Patenterteilung: **31.08.2016**
(21) Anmeldenummer: 03775149.2
(22) Anmeldetag: 06.09.2003
(51) Int. Cl.: F02D 41/40

(54) **VERFAHREN ZUM BETRIEB EINER FREMDGEZÜNDETEN BRENNKRAFTMASCHINE**
METHODS FOR OPERATING A SPARK-IGNITION INTERNAL COMBUSTION ENGINE
PROCEDES POUR FAIRE FONCTIONNER UN MOTEUR A COMBUSTION INTERNE A ALLUMAGE COMMANDE

(30) Priorität: 12.09.2002 DE 10242226
(43) Veröffentlichungstag der Anmeldung: 08.06.2005
(73) Patentinhaber: Daimler AG, 70327 Stuttgart (DE)
(72) Erfinder: ALTENSCHMIDT, Frank, 88400 Biberach (DE)
(74) Vertreter: JENSEN & SON
(86) Internationale Anmeldenummer: PCT/EP2003/009918
(87) Internationale Veröffentlichungsnummer: WO 2004/027237

(56) Entgegenhaltungen:
- EP-A- 1 167 734
- US-A- 5 794 585
- PATENT ABSTRACTS OF JAPAN Bd. 1999, Nr. 08, 30. Juni 1999 (1999-06-30) -& JP 11 082030 A (NISSAN MOTOR CO LTD), 26. März 1999 (1999-03-26)

## Beschreibung

Die Erfindung betrifft ein Verfahren zum Betrieb einer fremdgezündeten Brennkraftmaschine mit Direkteinspritzung mit den Merkmalen des Oberbegriffs des Anspruchs 1 bzw. des Oberbegriffs des Anspruchs 2.

Beim Betrieb von fremdgezündeten Brennkraftmaschinen mit Direkteinspritzung werden zur Verbesserung der Gemischbildung eine Reihe von Maßnahmen vorgenommen, um insbesondere in einem Schichtladebetrieb der Brennkraftmaschine eine sichere Zündung zu erzielen. Durch eine Taktung der Kraftstoffeinspritzung wird oftmals versucht, einen gezielten Einfluss auf die Gemischbildung vorzunehmen.

Aus der Patentschrift DE 198 577 85 C2 ist ein Verfahren zur Gemischbildung in einem Brennraum eines Verbrennungsmotors bekannt, bei dem eine dreistufige Kraftstoffeinspritzung ohne Einspritzunterbrechung vorgenommen wird, bei der eine Hauptkraftstoffmenge über eine Zusatzkraftstoffmenge mit einer Zündkraftstoffmenge verbunden wird.

Die Offenlegungsschrift DE 100 14 533 A1 offenbart ein Verfahren zum Betrieb einer Otto-Brennkraftmaschine mit Direkteinspritzung, bei dem sowohl in einem Homogenbetrieb als auch in einem Schichtladebetrieb eine getaktete Kraftstoffeinspritzung vorgenommen wird. Dabei wird ein Kraftstoffinjektor während eines Einspritzzeitpunktes in einer vorgegebenen Taktfolge vielfach geöffnet und geschlossen, so dass der gesamte zur Gemischbildung vorgesehene Kraftstoff in vielen kurzen Teileinspritzungen in den Brennraum gebracht wird.

Die Patentanmeldung JP 11-082030 A offenbart ein Verfahren zum Betrieb einer Otto-Brennkraftmaschine mit Direkteinspritzung, bei dem in einem Schichtladebetrieb eine getaktete Kraftstoffeinspritzung vorgenommen wird. Dabei wird einzuspritzende Kraftstoffmenge in drei Teilmengen im Kompressionshub der Brennkraftmaschine eingespritzt, wobei die Zündung des gebildeten Kraftstoff/Luft-Gemisches nach dem Einspritzende der dritten Teilmenge erfolgt.

Die Patentanmeldung US 5,794,585 A offenbart eine Brennkraftmaschine mit Direkteinspritzung. Im Homogenbetrieb wird eine getaktete Kraftstoffeinspritzung vorgenommen, wobei eine erste und eine zweite Teilmenge im Ansaughub eingespritzt wird und eine dritte Teilmenge einer einzuspritzenden Kraftstoffmenge im Kompressionshub eingespritzt wird.

Bei den bekannten Verfahren wird oftmals kein optimaler Verbrennungsvorgang bei den modernen fremdgezündeten Brennkraftmaschinen mit Direkteinspritzung erzielt, da ein Betriebsverhalten der Brennkraftmaschine ohne Zündaussetzer nicht gewährleistet werden kann.

Aufgabe der Erfindung ist es demgegenüber, den Einspritzvorgang derart zu gestalten, dass eine zündfähige Gemischwolke in der Nähe einer Zündquelle gebildet wird, um ein verbessertes Betriebsverhalten ohne Zündaussetzer zu erzielen.

Diese Aufgabe wird erfindungsgemäß durch ein Verfahren mit den Merkmalen des Anspruchs 1 und ein Verfahren mit den Merkmalen des Anspruchs 6 gelöst.

Das erste erfindungsgemäße Verfahren zeichnet sich dadurch, dass in einem Homogenbetrieb der Brennkraftmaschine die Kraftstoffeinspritzung derart gestaltet wird, dass eine erste und eine zweite Teilmenge im Ansaughub, und eine dritte Teilmenge im Kompressionshub eingebracht werden, wobei die Zündung des gebildeten Kraftstoffluftgemisches nach dem Einspritzende der dritten Teilmenge stattfindet. Alternativ kann die zweite Teilmenge in einem Anfangsteil des Kompressionshubes, insbesondere bis ca. 80° Kurbelwinkel vor einem oberen Totpunkt stattfinden. Vorzugsweise wird die Zündung des gebildeten Kraftstoffluftgemisches derart gestaltet, dass sie mit einem Abstand von maximal 100° Kurbelwinkel nach dem Ende der Einspritzung der dritten Teilmenge stattfindet. Somit wird ein Kraftstoffwandauftrag im Brennraum, insbesondere an der Zylinderwand vermieden. Die Steuerung der Einspritzteilmengen erfolgt derart, dass die eingespritzten Kraftstoffstrahlen verstärkt zerfallen und schneller verdampfen, da die Gesamtmenge getaktet in den Brennraum eingebracht wird. Dadurch findet eine bestmögliche Gemischhomogenisierung der eingespritzten Teilmengen statt, wobei gleichzeitig ein signifikanter Kraftstoffauftrag auf die Zylinderwand vermieden wird.

In Ausgestaltung des ersten Verfahrens wird die Kraftstoffeinspritzung derart gestaltet, dass die Einspritzdauer der dritten Teilmenge lastabhängig variiert wird, so dass sie etwa 5%-50% der gesamten Kraftstoffmenge beträgt. Dadurch werden die Eigenschaften der Gemischbildung derart beeinflusst, dass die motorische Verbrennung optimal stattfindet. Dadurch werden insbesondere Verbrauch und Emissionsbildung verringert. Des weiteren wird die Lage der gebildeten Gemischwolke beim jeweiligen Lastpunkt so beeinflusst, dass deren Positionierung im Brennraum zum Zündzeitpunkt in der Nähe der Zündquelle optimal gestaltet wird.

Erfindungsgemäß wird mit der Einspritzung der ersten Teilmenge im Ansaughub der Brennkraftmaschine in einem Homogenbetrieb zwischen 300° Kurbelwinkel und 200° Kurbelwinkel vor einem oberen Zünd-Totpunkt (ZOT) begonnen.

In einer weiteren Ausgestaltung des ersten Verfahrens beträgt eine Dauer zwischen dem Einspritzende der ersten Teilmenge und dem Einspritzbeginn der zweiten Teilmenge zwischen 10° Kurbelwinkel und 100° Kurbelwinkel.

Gemäß einer weiteren Ausgestaltung des ersten Verfahrens wird die zweite Teilmenge lastabhängig variiert, so dass sie gegebenenfalls weniger als ein Prozent der gesamten Kraftstoffeinspritzmenge betragen kann.

Weiterhin kann die Hauptmenge des eingespritzten Kraftstoffes zwischen der ersten und der zweiten Einspritzung aufgeteilt werden. Dabei wird die Kraftstoffmenge der dritten Einspritzung über die Einspritzzeit festgelegt, da diese sehr klein ist.

In einer weiteren Ausgestaltung des ersten Verfahrens wird die Kraftstoffeinspritzung im Homogenbetrieb derart gestaltet, dass die erste und zweite Einspritzung über einem Absolutwinkel und die dritte Einspritzung über einem Differenzwinkel zum Zündzeitpunkt lastabhängig festgelegt werden. Dabei kann bei einer aktiven Klopfregelung die dritte Einspritzung entsprechend dem Zündzeitpunkt auch später erfolgen.

Das zweite erfindungsgemäße Verfahren zeichnet sich dadurch aus, dass in einem Schichtladebetrieb der Brennkraftmaschine die Kraftstoffeinspritzung derart gestaltet wird, dass eine erste, eine zweite und eine dritte Teilmenge in einem Kompressionshub der Brennkraftmaschine in den Brennraum eingebracht werden, wobei die Einspritzung der zweiten Teilmenge bei einem Kurbelwinkel beendet wird, der in einem Bereich zwischen 15° Kurbelwinkel vor der Zündung des gebildeten Kraftstoff/Luft-Gemisches bis 4° Kurbelwinkel nach der Zündung des gebildeten Kraftstoff/Luft-Gemisches liegt. Es ist denkbar, dass die erste Teilmenge im Ansaughub vorzugsweise zwischen 200° und 300° Kurbelwinkel vor einem oberen Totpunkt vorgenommen wird. Die Lage und Eigenschaften der zündfähigen Gemischwolke werden positiv beeinflusst, wodurch in allen Lastbereichen ein Schichtladebetrieb optimal gestaltet werden kann. Die dadurch erzielte Gemischwolke kann bei gleicher Beibehaltung eines optimierten Wirkungsgrads zuverlässig gezündet werden. Somit kann eine weitere Minimierung der unerwünschten Zündaussetzern verwirklicht werden.

In einer Ausgestaltung des zweiten Verfahrens beträgt die Dauer zwischen dem Einspritzbeginn der dritten Teilmenge und dem Einspritzende der zweiten Teilmenge etwa 0,15-0,4 msec. Dabei wird die zweite Einspritzung über dem Einspritzende als Differenz zum Zündzeitpunkt festgelegt, so dass die Lage der ersten und der dritten Einspritzung über einen zeitlichen Abstand zum Einspritzbeginn bzw. zum Einspritzende der zweiten Einspritzung festgelegt werden. Vorzugsweise wird die Kraftstoffmasse der ersten und der dritten Einspritzung über die Einspritzzeit festgelegt, da diese Kraftstoffmengen klein sind. Die Kraftstoffmenge der Haupteinspritzung d.h. der zweiten Einspritzung ergibt sich aus der Differenz zwischen den Kraftstoffmengen der ersten und dritten Einspritzung. Insbesondre bei hohen Lasten mit einem effektiven Mitteldruck Pₘₑ größer als 4 bar kann die Kraftstoffmasse der ersten Teilmenge etwa bis zu 50% der gesamten Kraftstoffmasse betragen.

In einer weiteren Ausgestaltung der Erfindung werden die beiden erfindungsgemäßen Verfahren besonders bei nach außen öffnenden Einspritzdüsen verwendet, bei denen der Kraftstoff als Hohlkegel eingespritzt wird. Solche Einspritzdüsen werden bevorzugt bei Otto-Brennkraftmaschinen verwendet, bei denen ein strahlgeführtes Brennverfahren vorliegt. Dabei erfolgt die Einspritzung des Kraftstoffes derart, dass am Ende des Kraftstoffhohlkegels ein torusförmiger Wirbel gebildet wird, wobei die Elektroden einer im Brennraum angeordneten Zündkerze außerhalb des eingespritzten Kraftstoffhohlkegels angeordnet sind, aber gleichzeitig innerhalb eines gebildeten Kraftstoffluftgemisches liegen. Es ist denkbar, dass für die Zündung des gebildeten Kraftstoff/Luft-Gemisches zwei Zündkerzen verwendet werden. Durch die beiden beschriebenen Verfahren wird eine zündfähige Gemischwolke in etwa allen Drehzahl- und Lastbereichen beibehalten, da das Auftreten von Zündaussetzern verhindert wird.

Weitere Merkmale und Merkmalskombinationen ergeben sich aus der Beschreibung. Konkrete Ausführungsbeispiele der Erfindung sind in den Zeichnungen vereinfacht dargestellt und in der nachfolgenden Beschreibung näher erläutert. Es zeigen:
- Fig. 1: ein schematisches Kennfelddiagramm einer direkteinspritzenden Brennkraftmaschine,
- Fig. 2: ein schematisches Diagramm des Einspritzverlaufs der Brennkraftmaschine aus Fig. 1 in einem Homogenbetrieb mit dreifacher Einspritzung aufgetragen über dem Kurbelwinkel,
- Fig. 3: ein schematisches Diagramm des Einspritzverlaufs der Brennkraftmaschine aus Fig. 1 im Homogenbetrieb mit zweifacher Einspritzung aufgetragen über dem Kurbelwinkel, und
- Fig. 4: ein schematisches Diagramm des Einspritzverlaufs der Brennkraftmaschine aus Fig. 1 im Schichtladebetrieb aufgetragen über dem Kurbelwinkel.

Eine beispielhafte fremdgezündete Brennkraftmaschine mit Kraftstoffdirekteinspritzung weist mindestens einen Zylinder auf, in dem ein Brennraum zwischen einem im Zylinder längsverschieblich gehaltenen Kolben und einem Zylinderkopf gebildet ist. Die Längsbewegung des Kolbens erstreckt sich zwischen einem oberen Totpunkt OT und einem unteren Totpunkt UT. Die Brennkraftmaschine arbeitet nach dem 4-Takt-Prinzip, wobei sich das erfindungsgemäße Verfahren ebenfalls für fremdgezündete 2-Takt-Brennkraftmaschinen mit Direkteinspritzung eignet.

Im ersten Takt der 4-Takt-Brennkraftmaschine wird dem Brennraum durch einen Einlasskanal Verbrennungsluft zugeführt, wobei der Kolben sich in einer Abwärtsbewegung bis zu einem unteren Gaswechsel-Totpunkt GUT bewegt. In einem weiteren Kompressionstakt bewegt sich der Kolben in einer Aufwärtsbewegung von GUT bis zu einem oberen Zünd-Totpunkt ZOT, an dem der Kraftstoff in einem Schichtladebetrieb der Brennkraftmaschine während des Kompressionstaktes eingespritzt wird. Im Bereich des oberen Totpunkts ZOT wird mittels einer Zündkerze das Kraftstoff/Luft-Gemisch gezündet, wobei der Kolben in einer Abwärtsbewegung bis zu einem unteren Totpunkt UT expandiert. Im letzten Takt fährt der Kolben in einer Aufwärtsbewegung bis zum oberen Gaswechsel-Totpunkt GOT und schiebt die Gase aus dem Brennraum aus.

Die Brennkraftmaschine gemäß dem vorliegenden Ausführungsbeispiel wird vorzugsweise bei niedriger bis mittlerer Last L und/oder bei niedrigen bis mittleren Drehzahlen N im Schichtladebetrieb und im oberen Lastbereich bzw. bei Vollast im Homogenbetrieb gefahren. Alternativ kann der Schichtladebetrieb auf andere Lastbereiche, beispielsweise auf den oberen Lastbereich oder Vollast erweitert werden. Der Homogenbetrieb kann ebenso auf kleine Lastbereiche erweitert werden.

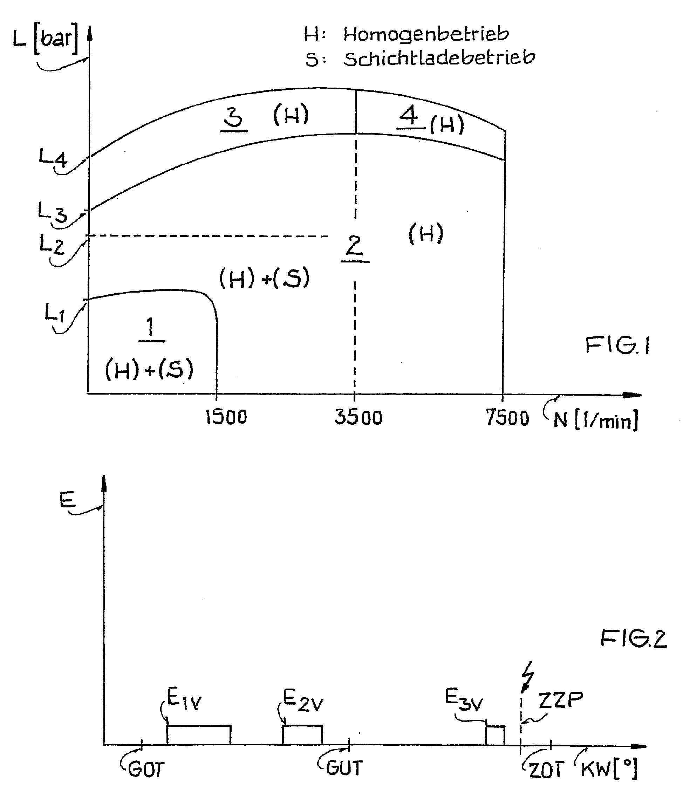

Gemäß Fig.1 wird lastabhängig die Mehrfacheinspritzung derart variiert, dass in einigen Lastbereichen eine zweifache bzw. dreifache Einspritzung stattfindet, wobei eine einfache Kraftstoffeinspritzung lastabhängig erfolgen kann. Im Kennfelddiagramm gemäß Fig. 1 findet im Lastbereich 1 eine einfache Kraftstoffeinspritzung statt, da dort eine sehr kleine Last L bei niedriger Drehzahl N gefahren wird. Im Lastbereich 2 wird vorzugsweise eine dreifache Kraftstoffeinspritzung vorgenommen, wobei eine einfache oder zweifache Kraftstoffeinspritzung bei einigen Lastpunkten stattfinden kann. Im Lastbereich 3 wird vorzugsweise eine einfach, eine zweifache oder eine dreifache Kraftstoffeinspritzung vorgenommen, wobei im Lastbereich 4 eine einfache oder eine zweifache Kraftstoffeinspritzung stattfindet. In Abhängigkeit von der Anzahl der vorgenommenen Einspritzungen sowie der Einspritzzeitpunkte der einzelnen Teilmengen liegt ein Homogenbetrieb H oder ein Schichtladebetrieb S vor. Beispielsweise kann im Lastbereich 1 mit einer Drehzahl bis zu 1500 und einer Last L₁ mit einem effektiven Mitteldruck bis zu einem bar ein Homogenbetrieb H oder ein Schichtladebetrieb S vorliegen. Bis zu einer Last L₂ mit einem effektiven Mitteldruck zwischen sieben und acht bar kann ebenso ein Homogenbetrieb H oder ein Schichtladebetrieb S vorliegen. Weitere Beispiele sind in Fig. 1 gezeigt, wobei die Last L₃ einem effektiven Mitteldruck etwa acht bis neun bar entspricht und die Last L₄ bei Brennkraftmaschinen ohne Aufladung einem effektiven Mitteldruck von 13 bar und bei Brennkraftmaschinen mit Aufladung einem effektiven Mitteldruck von etwa 21 bar entspricht.

Beim Schichtladebetrieb liegt ein sogenanntes strahlgeführtes Brennverfahren vor. Die Einspritzung des Kraftstoffes erfolgt im Schichtladebetrieb im Kompressionshub in einem Kurbelwinkelbereich zwischen 90° und 10° vor ZOT. Dabei erfolgt die Kraftstoffeinspritzung während eines Arbeitspiels in drei Teilmengen. Dabei kann die erste Teilmenge alternativ im Ansaughub vorzugsweise zwischen 200° und 300° Kurbelwinkel vor einem oberen Totpunkt, insbesondere bei hohen Lasten mit einem effektiven Mitteldruck zwischen vier und acht bar vorgenommen werden.

In Fig.2 ist der zeitliche Verlauf der Kraftstoffeinspritzungen beim Homogenbetrieb der Brennkraftmaschine mit dreifacher Einspritzung dargestellt, wobei sich die gezeigte dreifache Einspritzung beispielsweise sowohl für den oberen Lastbereich als auch für den Vollastbereich gut eignet. Alternativ kann eine derartige Dreifach-Einspritzung ebenfalls in anderen Lastpunkten, beispielsweise beim Startbetrieb der Brennkraftmaschine angewandt werden.

Die erste Kraftstoffeinspritzung E_{1V} findet im Ansaughub der Brennkraftmaschine, d.h. zwischen GOT und GUT, vorzugsweise in einem Kurbelwinkelbereich zwischen 300° und 200° Kurbelwinkel vor ZOT statt. Mit der Einspritzung der zweiten Teilmenge E_{2V} wird insbesondere nach einer Dauer von 10° bis 100° Kurbelwinkel nach dem Einspritzende der ersten Kraftstoffteilmenge E_{1V} begonnen. Die Menge der zweiten Einspritzung E_{2V} kann lastabhängig variiert werden, und ggf. weniger als 1% der gesamten Kraftstoffeinspritzmenge betragen. Es ist denkbar, die zweite Teilmenge E_{2V} in einem Anfangsteil des Kompressionshubes, insbesondere bis ca. 80° Kurbelwinkel vor dem oberen Zünd-Totpunkt ZOT vorzunehmen.

Im Kompressionshub der Brennkraftmaschine wird eine dritte Kraftstoffmenge E_{3V} eingespritzt, welche etwa 5% bis 50% der gesamten Kraftstoffmenge betragen kann. Die bereits im Ansaughub der Brennkraftmaschine eingespritzten Kraftstoffmengen werden bis zum Einspritzzeitpunkt der dritten Kraftstoffmenge E_{3V} homogenisiert, so dass im gesamten Brennraumbereich ein gut aufbereitetes Gemisch vorliegt. Durch die dritte Kraftstoffeinspritzung wird dann im Bereich der Zündkerze eine zündfähige Gemischwolke plaziert, womit eine zuverlässige Zündung des gesamten im Brennraum vorhandenen Gemisches erfolgt. Kurz nach dem Einspritzende der dritten Kraftstoffteilmenge E_{3V} findet die Zündung des Gemisches statt. Für eine optimale Zündung der Gemischwolke wird der Zündzeitpunkt ZZP lastabhängig variiert, so dass Zündaussetzer in allen Lastbereichen verhindert werden, wobei der Abstand zwischen dem Zündzeitpunkt ZZP und dem Ende der dritten Kraftstoffteilmenge E_{3V} nicht mehr als 100° Kurbelwinkel beträgt.

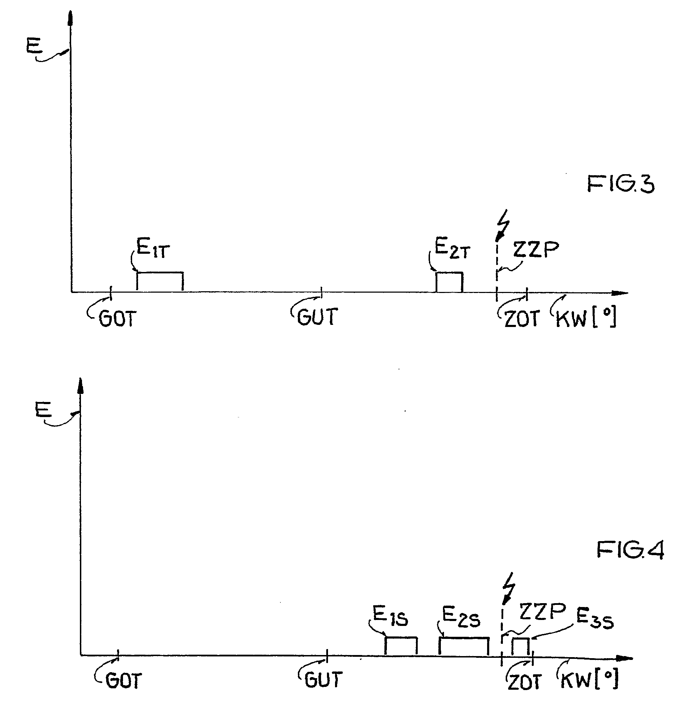

Im Homogenbetrieb der Brennkraftmaschine ist es auch denkbar, die zweite Kraftstoffeinspritzung auszulassen, so dass gemäß Fig.3 eine zweifache Kraftstoffeinspritzung stattfindet. Eine zweifache Einspritzung im Homogenbetrieb der Brennkraftmaschine wird vorzugsweise im Teillastbereich vorgenommen. Dabei findet die erste Kraftstoffteilmenge E_{1T} im Ansaughub statt. Die zweite Kraftstoffteilmenge E_{1T} wird dann im Kompressionshub kurz vor dem Zündzeitpunkt ZZP vorgenommen.

In Fig.4 ist der zeitliche Verlauf der Kraftstoffeinspritzungen E im Schichtladebetrieb dargestellt, wobei die Kraftstoffeinspritzungen derart gestaltet sind, dass eine erste, eine zweite und eine dritte Teilmenge E_{1S}, E_{S2S}, E_{3S} im Kompressionshub der Brennkraftmaschine eingebracht werden. Die erste Teilmenge E_{1S} kann alternativ bei hohen Lasten, insbesondere mit einem effektiven Mitteldruck Pₘₑ zwischen 4 und 8 bar, vorzugsweise im Ansaughub zwischen 200° und 300° Kurbelwinkel vor ZOT vorgenommen werden. Im Schichtladebetrieb der Brennkraftmaschine findet die Zündung zwischen der zweiten Kraftstoffeinspritzung E_{2S} und der dritten Kraftstoffeinspritzung E_{3S} statt. Die Einspritzung der zweiten Teilmenge E_{2S} wird lastabhängig in einem Kurbelwinkelbereich beendet, der zwischen 15° Kurbelwinkel KW vor dem Zündzeitpunkt ZZP und 4° Kurbelwinkel KW nach dem Zündzeitpunkt ZZP liegt. D.h. die Zündung des gebildeten Kraftstoff/Luft-Gemisches wird bei einigen Lastpunktbereichen während der Einspritzung der zweiten Teilmenge vorgenommen. Vorteilhafterweise findet die dritte Einspritzung E_{3S} kurz nach dem Ende der zweiten Einspritzung E_{3S} statt, so dass eine sichere Zündung der dritten Teilmenge E_{3S} gewährleistet ist.

Bei diesem Ausführungsbeispiel wird ein strahlgeführtes Brennverfahren durchgeführt, bei dem vorzugsweise eine nach außen öffnende Einspritzdüse verwendet wird. Die oben beschriebene Einspritzstrategie dient insbesondere zur Stabilisation des strahlgeführten Brennverfahrens im Schichtladebetrieb und läßt eine höhere Menge der Abgasrückführung im Schichtladebetrieb zu. Dadurch wird eine Verringerung der NOx-Bildung erzielt.

Beim strahlgeführten Brennverfahren wird mittels der Einspritzdüse ein Kraftstoffhohlkegel mit einem Winkel zwischen 70° und 100° in den Brennraum eingebracht, so dass der Kraftstoffhohlkegel auf eine im Schichtladebetrieb im Brennraum komprimierte Verbrennungsluft trifft. Ein torusförmiger Wirbel wird dadurch im Außenbereich bzw. am Rand des eingespritzten Kraftstoffhohlkegels gebildet, womit im Bereich der Elektroden der Zündkerze ein zündfähiges Kraftstoff/LuftGemisch bereitgestellt wird. Dabei erfolgt die Anordnung der Zündkerze derart, dass die Elektroden der Zündkerze in den erzielten Randwirbel hineinragen, ohne dass sie während der Kraftstoffeinspritzung wesentlich benetzt werden, d.h. bei einer leichten bzw. geringfügigen Benetzung der Elektroden der Zündkerze sollte bis zum Zündzeitpunkt der größte Anteil des Kraftstoffes an den Elektroden wieder verdampft sein. Durch die dritte Kraftstoffteilmenge E_{3S} wird eine Stabilisation der einsetzenden Verbrennung erreicht.

Mit der beschriebenen Mehrfacheinspritzung sowohl im Homogenbetrieb als auch im Schichtladebetrieb kann das Betriebsverhalten der Brennkraftmaschine verbessert werden. Verbrauch und Emissionsbildung können dadurch optimiert werden. Diese Vorteile ergeben sich insbesondere beim Einsatz eines Piezo-Injektors, bei dem kurze Einspritzzeiten, beispielsweise weniger als 0,25 msec, leicht erzielt werden können. Dadurch können in einer Teilmenge sehr kleine Kraftstoffmengen in den Brennraum eingebracht werden, wenn die Kraftstoffeinspritzung vorzugsweise mit hohen Einspritzdrücken zwischen 150 und 200 bar oder zwischen 150 und 300 bar erfolgt. Somit werden Mehrfach-Einspritzungen während eines Arbeitspiels sowohl im Vollastbereich als auch beim Start einer fremdgezündeten Brennkraftmaschine mit Direkteinspritzung ermöglicht.

Vorzugsweise wird bei allen Verfahrensbeispielen der Kraftstoff im Schichtladebetrieb bei einem Brennraumgegendruck von ca. 16 bar in den Brennraum eingespritzt. Es ist ferner vorteilhaft, dass der Einspritzdruck des Kraftstoffes zwischen 100 bar und 300 bar insbesondere zwischen 150 bar und 250 bar variiert wird, wobei der aus der Einspritzdüse austretende Kraftstoffstrahl hohlkegelförmig mit einem Strahlwinkel zwischen 70° und 100° in den Brennraum eingespritzt wird.

Die Erfindung betrifft zwei Verfahren zur Bildung eines Kraftstoff/Luft-Gemisches einer direkt einspritzenden Brennkraftmaschine mit Fremdzündung, wobei beim ersten Verfahren in einem Homogenbetrieb der Brennkraftmaschine die Kraftstoffeinspritzung derart gestaltet wird, dass eine erste und eine zweite Teilmenge im Ansaughub, und eine dritte Teilmenge im Kompressionshub eingebracht werden, wobei die Zündung des gebildeten Kraftstoff/Luft-Gemischs nach dem Einspritzende der dritten Teilmenge stattfindet. In einem Schichtladebetrieb der Brennkraftmaschine wird gemäß dem zweiten Verfahren die Kraftstoffeinspritzung derart gestaltet, dass eine erste, eine zweite und eine dritte Teilmenge während des Kompressionshubes der Brennkraftmaschine in den Brennraum eingebracht werden, wobei die Einspritzung der zweiten Teilmenge bei einem Kurbelwinkel beendet wird, der in einem Bereich zwischen 15°KW vor ZZP bis 4°KW nach ZZP liegt.

Insbesondere eignen sich die beiden beschriebenen Verfahren für den Einsatz bei direkteinspritzenden Brennkraftmaschinen mit Fremdzündung, bei denen das strahlgeführte Brennverfahren vorliegt. Bei einem solchen Brennverfahren muss innerhalb kürzester Zeit ein gut aufbereitetes Gemisch im Bereich der Zündkerze vorliegen. Die Lage und Eigenschaften der zündfähigen Gemischwolke werden positiv beeinflusst, wodurch in allen Lastbereichen eine optimale Gemischwolke erzielt wird. Dies führt zu einer sicheren Zündung des gebildeten Gemisches bei gleicher Beibehaltung eines optimierten Wirkungsgrads während des gesamten Motorbetriebs. Dadurch kann eine Minimierung der unerwünschten Zündaussetzern verwirklicht werden. Insbesondere beim Start der Brennkraftmaschine kann die Kraftstoffmenge reduziert werden, was zu einer Verringerung der Emissionen im Start führt, so dass strenge Abgasnormen erfüllt werden können. Des weiteren kann das Drehmoment der Brennkraftmaschine im Vollastbereich mittels der Mehrfach-Einspritzung bzw. der dreifachen Einspritzung gesteigert werden.

Weiterhin kann sowohl im Homogenbetrieb als auch im Schichtladebetrieb die Verträglichkeit der Abgasrückführung (AGR) erweitert werden, d.h. es können während eines Arbeitsspiels höhere Abgasmengen in den Brennraum zurückgeführt werden, um an der Verbrennung teilzunehmen. Insbesondere ermöglicht das erfindungsgemäße Verfahren durch die dreifache Einspritzung im Schichtladebetrieb der Brennkraftmaschine die Stabilisierung des sogenannten strahlgeführten Brennverfahrens, wodurch eine höhere AGR-Verträglichkeit erzielt wird. Dies führt zu einer weiteren Verringerung der NOx- sowie der Partikelemissionen. Eine Erweiterung des Schichtladebetriebs auf alle Drehzahl- und Lastbereiche kann leichter erzielt werden.

Durch die erzielte Funktionalität der oben beschriebenen Verfahrens soll ermöglicht werden, dass bei einer fremdgezündeten Brennkraftmaschine mit Direkteinspritzung abhängig vom gefahrenen Lastpunkt eine einfache, eine zweifache oder eine dreifache Einspritzung ermöglicht wird. Dabei bleiben die Regelungskriterien in einem für die Einspritz- und Zündzeitpunktsteuerung vorgesehnen Steuergerät erhalten.

## Patentansprüche

1. Verfahren zur Bildung eines zündfähigen Kraftstoff/Luft-Gemisches in einem Brennraum einer fremdgezündeten Brennkraftmaschine mit Direkteinspritzung, bei dem
- über mindestens einen Einlasskanal einem Brennraum Verbrennungsluft zugeführt wird,
- mittels eines im Brennraum angeordneten Kraftstoffinjektors Kraftstoff in den Brennraum eingespritzt wird,
- mittels mindestes einer im Brennraum angeordneten Zündkerzen ein gebildetes Kraftstoff/Luft-Gemisch gezündet wird,
- wobei die Kraftstoffeinspritzung in mehreren Teilmengen erfolgt,
- in einem Homogenbetrieb der Brennkraftmaschine die Kraftstoffeinspritzung derart gestaltet wird, dass eine erste und eine zweite Teilmenge in Ansaughub, und eine dritte Teilmenge im Kompressionshub eingebracht werden,
**dadurch gekennzeichnet,**
- **dass** die Zündung des gebildeten Kraftstoff/Luft-Gemischs mit einem Abstand zwischen 0°KW und 100°KW nach dem Einspritzende der dritten Teilmenge stattfindet,
- die Einspritzdauer der dritten Teilmenge lastabhängig derart variiert wird, dass sie etwa 5% bis 50% der gesamten Kraftstoffmenge beträgt,
- mit der Einspritzung der ersten Teilmenge im Ansaughub zwischen 300°KW und 200°KW vor dem oberen Totpunkt begonnen wird,
- eine Dauer zwischen dem Einspritzende der ersten Teilmenge und dem Einspritzbeginn der zweiten Teilmenge etwa 10°KW bis 60°KW beträgt und
- die zweite Teilmenge lastabhängig variiert wird, und gegebenenfalls weniger als 1 % der gesamten Kraftstoffeinspritzmenge beträgt

2. Verfahren zur Bildung eines zündfähigen Kraftstoff/LuftGemisches in einem Brennraum einer fremdgezündeten Brennkraftmaschine mit Direkteinspritzung, bei dem
- über einen Einlasskanal Verbrennungsluft einem Brennraum zugeführt wird,
- mittels eines im Brennraum angeordneten Kraftstoffinjektors Kraftstoff in den Brennraum eingespritzt wird,
- mittels einer im Brennraum angeordneten Zündkerze ein gebildetes Kraftstoff/Luft-Gemisch gezündet wird,
- wobei die Kraftstoffeinspritzung in mehreren Teilmengen erfolgt,
**dadurch gekennzeichnet,**
- **dass** in einem Schichtladebetrieb der Brennkraftmaschine die Kraftstoffeinspritzung derart gestaltet wird, dass eine erste, eine zweite und eine dritte Teilmenge in einem Kompressionshub der Brennkraftmaschine in den Brennraum eingebracht werden, wobei
- die Einspritzung der zweiten Teilmenge bei einem Kurbelwinkel beendet wird, der in einem Bereich zwischen 15°KW vor der Zündung des gebildeten Kraftstoff/Luft-Gemischs bis 4°KW nach der Zündung des gebildeten Kraftstoff/Luft-Gemischs liegt.

3. Verfahren nach Anspruch 2,
**dadurch gekennzeichnet,**
**dass** die Dauer zwischen dem Einspritzbeginn der dritten Teilmenge und dem Einspritzende der zweiten Teilmenge etwa 0,15 bis 0,4 ms beträgt.

4. Verfahren nach einem der vorhergehenden Ansprüche,
**dadurch gekennzeichet,**
dass die Kraftstoffeinspritzdüse als eine nach außen öffnende Einspritzdüse derart ausgebildet ist, dass der Kraftstoff aus der Kraftstoffeinspritzdüse in Form eines Hohlkegels eingespritzt wird.

5. Verfahren nach einem der vorhergehenden Ansprüche,
**dadurch gekennzeichnet,**
**dass** am Ende des eingespritzten Kraftstoffhohlkegels ein torusförmiger Kraftstoff/Luftgemisch-Wirbel derart gebildet wird, dass die außerhalb einer Mantelfläche des eingespritzten Hohlkegels angeordneten Elektroden einer Zündkerze vom torusförmigen und zündfähigen Kraftstoff/Luftgemisch-Wirbel umfasst werden.

6. Verfahren nach einem der vorhergehenden Ansprüche,
**dadurch gekennzeichnet,**
**dass** die Steuereinrichtung der Kraftstoffeinspritzdüse piezoelektrisch angetrieben wird.

## Claims

1. Method for forming an ignitable air/fuel mixture in a combustion chamber of a spark-ignition internal combustion engine with direct injection, wherein
- combustion air is fed into a combustion chamber via at least one intake port,
- fuel is injected into the combustion chamber by means of a fuel injector located in the combustion chamber,
- a formed air/fuel mixture is ignited by means of at least one spark plug located in the combustion chamber,
- wherein the fuel is injected in several sub-quantities,
- in a homogeneous operating mode of the internal combustion engine, the fuel injection is organised such that a first and a second sub-quantity are introduced in the intake stroke and a third sub-quantity is introduced in the compression stroke,
**characterised in that**
- the formed air/fuel mixture is ignited at a distance between 0° crank angle and 100° crank angle after the end of the injection of the third sub-quantity,
- the duration of the injection of the third sub-quantity is varied in a load-dependent manner in such a way that it amounts to approximately 5% to 50% of the total fuel quantity,
- the process starts with the injection of the first sub-quantity in the intake stroke between 300° crank angle and 200° crank angle before top dead centre,
- a duration between the end of the injection of the first sub-quantity and the start of the injection of the second sub-quantity is approximately 10° crank angle to 60° crank angle, and
- the second sub-quantity is varied in a load-dependent manner and may amount to less than 1% of the total fuel injection quantity.

2. Method for forming an ignitable air/fuel mixture in a combustion chamber of a spark-ignition internal combustion engine with direct injection, wherein
- combustion air is fed into a combustion chamber via an intake port,
- fuel is injected into the combustion chamber by means of a fuel injector located in the combustion chamber,
- a formed air/fuel mixture is ignited by means of a spark plug located in the combustion chamber,
- wherein the fuel is injected in several sub-quantities,
**characterised in that**
- in a stratified charge operating mode of the internal combustion engine, the fuel injection is organised such that a first, a second and a third sub-quantity are introduced into the combustion chamber in a compression stroke of the internal combustion engine, wherein
- the injection of the second sub-quantity is terminated at a crank angle in the range between 15° crank angle before the ignition of the formed air/fuel mixture to 4° crank angle after the ignition of the formed air/fuel mixture.

3. Method according to claim 2,
**characterised in that**
the duration between the start of the injection of the third sub-quantity and the end of the injection of the second sub-quantity is approximately 0.15 to 0.4 ms.

4. Method according to any of the preceding claims,
**characterised in that**
the fuel injector is designed as an outward-opening injector in such a way that the fuel is injected from the injector in the form of a hollow cone.

5. Method according to any of the preceding claims,
**characterised in that**
at the end of the injected fuel hollow cone, a toroidal air/fuel mixture swirl is formed in such a way that the electrodes of a spark plug which lie outside of a circumferential surface of the injected hollow cone are enclosed by the toroidal and ignitable toroidal air/fuel mixture swirl.

6. Method according to any of the preceding claims,
**characterised in that**
the control unit of the fuel injector is driven piezoelectrically.

## Revendications

1. Procédé destiné à former un mélange d'air/carburant explosif dans une chambre de combustion d'un moteur à combustion interne à allumage commandé équipé d'une injection directe, selon lequel
- l'air de combustion est acheminé dans une chambre à combustion par au moins un canal d'admission,
- le carburant est injecté dans la chambre de combustion au moyen d'un injecteur de carburant situé dans la chambre de combustion,
- un mélange formé d'air et de carburant est allumé au moyen d'au moins une bougie d'allumage disposée dans la chambre de combustion,
- l'injection de carburant s'effectuant en plusieurs quantités partielles,
- lors d'un fonctionnement homogène du moteur à combustion interne, l'injection du carburant est conçue de telle sorte qu'une première et une deuxième quantités partielles soient introduites dans la course d'admission et une troisième quantité partielle dans la course de compression, **caractérisé en ce que**
- l'allumage du mélange formé d'air et de carburant s'effectue à une distance comprise entre 0°KW et 100°KW après la fin de l'injection de la troisième quantité partielle de mélange,
- la durée de l'injection de la troisième quantité partielle est modifiée en fonction de la charge de sorte qu'elle soit comprise environ entre 5 % et 50 % de la quantité totale de carburant,
- l'injection de la première quantité partielle dans la course d'admission commence entre 300°KW et 200°KW avant le point mort supérieur,
- une durée entre la fin de l'injection de la première quantité partielle et le début de l'injection de la deuxième quantité partielle est comprise entre environ 10°KW et 60°KW et
- la deuxième quantité partielle est modifiée en fonction de la charge et le cas échéant est inférieure à 1 % de la quantité totale d'injection de carburant.

2. Procédé destiné à former un mélange d'air/carburant explosif dans une chambre de combustion d'un moteur à combustion interne à allumage commandé équipé d'une injection directe, selon lequel
- l'air de combustion est acheminé dans une chambre à combustion par un canal d'admission,
- le carburant est injecté dans la chambre de combustion au moyen d'un injecteur de carburant situé dans la chambre de combustion,
- un mélange formé d'air et de carburant étant allumé au moyen d'au moins une bougie d'allumage disposée dans la chambre de combustion,
- l'injection de carburant s'effectuant en plusieurs quantités partielles, **caractérisé en ce que**
- lors d'un fonctionnement en charge stratifiée du moteur à combustion interne, l'injection du carburant est conçue de telle sorte qu'une première, une deuxième et une troisième quantités partielles soient introduites dans une course de compression dans la chambre de combustion du moteur à combustion interne,
- l'injection de la deuxième quantité partielle s'achève lorsqu'un angle de vilebrequin se situe dans une zone comprise entre 15 °KW avant l'allumage du mélange formé d'air et de carburant et 4 KW après l'allumage du mélange formé d'air et de carburant.

3. Procédé selon la revendication 2, **caractérisé en ce que** la durée entre le début de l'injection de la troisième quantité partielle et la fin de l'injection de la deuxième quantité partielle est comprise environ entre 0,15 bis 0,4 ms.

4. Procédé selon l'une quelconque des revendications précédentes, **caractérisé en ce que** l'injecteur de carburant est conçu tel un injecteur ouvert vers l'extérieur de sorte que le carburant provenant de l'injecteur de carburant soit injecté sous forme d'un cône creux.

5. Procédé selon l'une quelconque des revendications précédentes, **caractérisé en ce qu'**à l'extrémité du cône creux de carburant injecté se forme un tourbillon de mélange d'air et de carburant torique de telle sorte que les électrodes d'une bougie d'allumage disposées à l'extérieur d'une surface d'enveloppe du cône creux injecté d'une bougie d'allumage soient entourées par le tourbillon de mélange d'air et de carburant torique et explosif.

6. Procédé selon l'une quelconque des revendications précédentes, **caractérisé en ce que** le dispositif de commande de l'injecteur de carburant est entraîné de manière piézoélectrique.
